# EUROPEAN PATENT APPLICATION

(11) **EP 2 915 699 A2**
(43) Date of publication of application: **09.09.2015**
(21) Application number: 15158119.6
(22) Date of filing: 06.03.2015
(51) Int. Cl.: B60Q 3/00, B64D 11/00, B64D 47/00

(54) **Aircraft cabin light systems**

(30) Priority: 07.03.2014 US 201461949700 P
(71) Applicant: IDD Aerospace Corporation, Redmond, WA 98052 (US)
(72) Inventor: Timm, Birger, 29478 Höhbeck (DE); Antonczyk, Volker, 21039 Hamburg (DE); Heine, Henrik, 22045 Hamburg (DE)
(74) Representative: Eisenführ Speiser

(57) **Abstract**

The invention relates to an interior lighting device for mounting at a ceiling portion of a cabin interior of a passenger aircraft. The invention further relates to a lighting arrangement of two or more of such interior lighting devices and a passenger aircraft comprising a passenger cabin, wherein the cabin has such a lighting arrangement. The transparent area light source and the reading lights are highly integrated and the reading light is placed behind the transparent area light source. Both together are mounted preferably in a ceiling portion of the cabin interior, for example within a PSU, which is placed above the head of a passenger.

## Description

### TECHNICAL FIELD

The invention relates to an interior lighting device for mounting at a ceiling portion of a cabin interior of a passenger aircraft. The invention further relates to a lighting arrangement of two or more of such interior lighting devices and a passenger aircraft comprising a passenger cabin, wherein the cabin has such a lighting arrangement.

The invention relates to the usage of separate reading light spots on the one hand, usually integrated in a PSU (passenger service unit), and sidewall lights on the other hand, usually realized by fluorescent light tubes or LED light strips, providing general illumination.

### BACKGOUND

In aircraft cabins, in general these two different light sources are used. The sidewall lights are arranged in recesses at the sidewall panels and/or ceiling portions to provide a general illumination of the aircraft cabin. These lights are usually switched off during take off and landing phases of the aircraft and may also be switched off during night flights. Normally, also a dimmer is provided for adjusting intensity of such lights.

Additionally, aircrafts are provided with reading lights which are usually integrated in the PSU, at the lower potion of a luggage compartment overhead the passengers. For each passenger aircraft seat, a separate reading light is provided which is individually on and off switchable, also during take off and landing phases, and provides a focused and geometrically defined light spot to the passenger, in particular to an area which may be defined as a reading area, e.g. the tablet for the passenger.

The invention seeks to improve on the one hand the appearance of the interior of the cabin, and on the other hand seeks to reduce space required by lighting sources, while at the same time providing light for the cabin and the passengers in a sufficient and convenient manner. Furthermore, the invention seeks to improve the control of switching on and off cabin light sources.

### SUMMARY

This problem is solved according to the first aspect of the invention by an interior lighting device for mounting to the ceiling portion of a cabin interior of a passenger aircraft with the features of claim 1.

Thus, the interior lighting device comprises a transparent area light source for providing a diffuse light to the cabin, wherein the transparent area light source comprises an at least partially transparent plate shaped illuminatable body, the body having a front side and a back side, and the front side being adapted to be oriented toward the cabin; and at least one reading light provided at the back side of the illuminatable body for directing a focused light spot through the illuminatable body.

According to the invention, the transparent area light source and the reading lights are highly integrated and the reading light is placed behind the transparent area light source. Both together are mounted preferably in a ceiling portion of the cabin interior, for example within a PSU, which is placed above the head of a passenger. The transparent area light source is used for providing a diffuse light to the cabin, for providing a general illumination. The transparent area light source is used preferably instead of sidewall lights which are usually realized by fluorescent light tubes or LED light strips, provided within recesses of the sidewalls. The reading light or reading lights, according to the present invention, are directed to direct their light beam or light spot through the transparent body of the transparent area light source to the passenger. Due to this integration of both, the transparent area light source for the background or ambient light, and the reading light, the space consumed by these two devices is reduced and furthermore, the cabin interior has a flush appearance, since the reading lights or hidden lights are arranged behind the transparent body transparent area light source. This results in a better appearance of the interior and results are beneficial with regard to cleaning and maintenance issues.

According to one preferred embodiment, the transparent area light source comprises a transparent OLED element; a so called TOLED. The term OLED in the present case is also used for AMOLED elements, which also can be in transparent form. Preferably, the transparent body of the transparent area light source is formed as a transparent OLED element. The reading light thus is arranged behind the transparent OLED element and is adapted to beam its light spot through the OLED element to the cabin interior. The transparent OLED can be arranged substantially flush with a surface of the cabin wall, in particular, ceiling portion or PSU, above the head of the passenger. Additionally, for providing a diffuse light, such a transparent OLED has also the advantage that information can be provided to the passenger, such as advertisement or flight status information, information regarding service or served meals. Furthermore, it is possible to change color of the light provided with the transparent OLED element in a discrete or continuous manner.

According to a second preferred embodiment, the transparent area light source comprises a LED edge-lit element. Such a LED edge-lit element normally comprises or consists of a transparent plate shaped body, e.g. formed out of an amorphous material, such as glass or transparent plastic material, e.g. sold under the trademark PLEXIGLAS®, and at least a LED or a strip of LEDs provided at an edge portion of this body so as to provide a beam of light into the body, in particular along a plane of the body.

The transparent body, according to such an embodiment preferably comprises diffuser particles for re-directing or deflecting the light from the edge to the front side of the body and into the cabin. Such diffuser particles are used to redirect the light travelling inside the body, so that the light does not only travel from one edge to the opposing edge, but is being redirected and directed out of the body into the cabin to illuminate the cabin. The diffuser particles are preferably arranged in such a way that lights travelling substantially parallel to a plane direction of the transparent body is redirected and reflected by means of these particles, but light travelling substantially perpendicular to the plane direction of the body, as e.g. light from the reading lights is substantially not redirected or reflected by the diffuser particles. This helps to provide a focused and defined light spot from the reading light. Alternatively, or additionally, it can be provided that in areas where the light beam from the reading light intersects the transparent body, fewer diffuser particles are provided. Also in such an arrangement, the light beam from the reading light is less diffused, when travelling through the transparent body.

Additionally, or alternatively to the diffuser particles, the transparent body can be provided with a structured surface portion. The inner and/or outer surface of the transparent body, thus, the front side or the back side may be provided with grooves or rips which are arranged substantially perpendicular to a direction of the direction of the emitted light by the LED at the edge of the transparent body, thus deflecting these white beams and direct them toward the inside of the cabin. Such grooves or rips comprise a very limited dimension in width direction and thus, less influencing the light beam of the reading light travelling through the transparent body.

According to a particularly preferred embodiment, the reading light is optically coupled with a transparent body for directing a focused reading light beam through the transparent body for forming a light spot in the cabin. Such an optical coupling can comprise one or more lenses or one or more polarizing filters, which influence the light emitted by the reading light. The optical coupling is formed in such a way that the beam of light emitted by the reading light and directed through the transparent body is kept focused or being focused and sharpened in geometry by means of the transparent body. The transparent body may comprise circular grooves or rips for achieving this. In particular, the optical coupling may be arranged in such a way that reflection of the light of the reading light from the surface of the transparent body is almost completely avoided or reflected portions of the reading light by the transparent body are reflected back into a closed, light beam guiding element extending from the reading light to the transparent body the reading light beam and thus is not lost by such reflection. In particular, such coupling may be accomplished using one or a plurality of optical fibres connecting the reading light with a surface section of the transparent body.

According to a further preferred embodiment, the interior lighting device comprises a control unit coupled to the transparent area light source and the reading light for individually switching on and off the transparent area light source and the reading lights. It is preferred that both, the transparent area light source and the reading lights can be switched on and off individually. Thus, the reading light may be switched on and the transparent area light source may be switched off, or vice versa, or both, the transparent area light source and the reading light can be switched on. Dependent on the current mode of flight and the wishes of the passenger, the illuminating situation can be changed and an adequate illumination situation can be created. Such a control unit preferably comprises at least one switch for manually switching on and off the light sources and an electrical circuit for providing reading lights and the transparent area light source with electrical energy and preferably signals for indicating a mode of operation. This is in particular preferred, when the transparent area light source comprises a transparent OLED which is also used for providing information to the passenger.

Moreover, it is preferred that a reflector surface is provided around the reading light and extending to the transparent body. Such a reflector surface preferably forms a reflector for both, the reading light and the transparent area light source. Preferably, the back side of the transparent body, the reflector surface and the reading light define together a closed cavity. Thus, the reflector surface completely extends from the reading light to the transparent body. The reflector surface may be provided on a housing, which couples the reading light to the transparent body of the transparent area light source so that the interior lighting device is formed as a single module. Such a reflector surface increases the light output in the area illumination mode, in which the transparent area light sources are switched on. This helps to save energy and serves for making the respective aircraft more efficient.

Preferably it is provided that the direction of the light beam emitted by the reading light is adjustable. Thus, the direction may be adjusted by the respective passenger so as to direct the light spot emitted by the reading light on a desired spot in a predetermined range. This may be realised by mechanical means such as a pivotable ball housing for the reading light and/or by electrical means.

According to a second aspect of the invention, the problem stated in the introductory portion is solved by a lighting arrangement of two or more interior lighting devices according to at least one of the aforementioned preferred embodiments of a interior lighting device, wherein the interior lighting devices are connected to a central control unit, such that the transparent area light sources of all and/or subgroups of the interior lighting devices can be switched on and/or off centrally. Such a central control unit is preferably controllable by the cabin attendant or cabin crew and used for switching between different applied modes. For example, during take off and landing of the aircraft, the transparent area light sources may be switched off, while the reading lights can stay switched on. Furthermore, it is possible to define specific subgroups of interior lighting devices, for example the business class may form a subgroup and the economy class may form a second subgroup. Other subgroups can comprise the seating rows with odd numbers or even numbers. Since the interior lighting devices are associated with a specific seat or a specific row of seats, identification and definition of these subgroups is much simpler than in the state-of-the-art. In the state-of-the-art where the ambient light is provided at the sideboard and in recesses of sidewall panels, this is more complex, since the sidewall panels are not readily associated with seat rows. Thus, for example, the first ten sidewall panels may correspond to the first fourteen rows of seats. The present invention lastly provides a solution which is controllable in an intuitive manner for the cabin attendant or cabin crew, which also increases safety issues.

According to a third aspect of the invention, the problem stated in the introductory portion is solved within the passenger aircraft, providing a passenger cabin, wherein the cabin has at least one lighting arrangement, according to the aforementioned lighting arrangement of the second aspect of the invention.

It shall be understood that the interior lighting device, the lighting arrangement, and the passenger aircraft comprise multiple identical or similar aspects, which in particular are defined in the depending claims. Insofar, reference is made to the above description of the first aspect of the invention with regard to preferred embodiments and also benefits and advantages of the invention.

In summary, the present invention provides a transparent area light source panel, providing diffuse ambient area illumination, combined with reading spot lights. Due to the transparency, the spot lights perform their normal function, while hidden behind the light panel. The general idea is: combined conventional reading spot lights technology with a transparent area light source (e.g. transparent OLED or side coupled LED area light guide technology). This concept supports or replaces the current existing A/C sidewall lighting for better homogeneity and enhance light output and it generally improves the cabin lighting capabilities of an A/C lighting system.

In addition to that, the reading light function is integrated. Due to the transparency of the area light source, the light of the spots can pass through, regardless of the on- or off-state of the area light source. Both, while white and colored light can be emitted by the unit, depending on the use of simple white or RGBW lighting components for spots and light panels. The key benefits are: combination of diffuse light function and direct spot light function in one unit; design improvements due to the flush surface with illumination function; improved passenger personal lighting capabilities of an A/C lighting system.

### BRIEF DESCRIPTION OF THE DRAWINGS

In the following, the invention is described with respect to specific embodiments and reference is made to the accompanying drawings, in which:
- Fig.1: shows a schematic cross-section of a first embodiment of an interior lighting device;
- Fig. 2a - 2c: show different working modes of the interior lighting device according to Fig. 1;
- Fig. 3a, 3b: show the interior lighting device of Fig. 1 mounted above a passenger seat row;
- Fig. 4: shows a schematic exploded view of a transparent area light source using the LED edge-lit technology;
- Fig. 5: shows an interior lighting device according to a second embodiment;
- Fig. 6: shows an interior lighting device according to a third embodiment;
- Fig. 7: shows a schematic cross-sectional view of a cabin aircraft with a lighting arrangement according to the invention; and
- Fig. 8: shows a schematic of a control unit connected to an interior lighting device.

### DETAILED DESCRIPTION

The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form of a detail shown and described herein, nor to anything less than the whole of the invention disclosed herein and as claimed as herein after. Further, the features described in the description, the drawings and the claims disclosing the invention may be essential for the invention considered alone or in combination. In particular, any reference sign in the claims shall not be considered as limiting the scope of the invention. The wording "comprising" does not exclude other elements or steps. The wording "a" or "an" does not exclude a plurality. The wording, "a number of" items, comprises also the number of one, i.e. a single item, and further numbers like two, three, four and so forth.

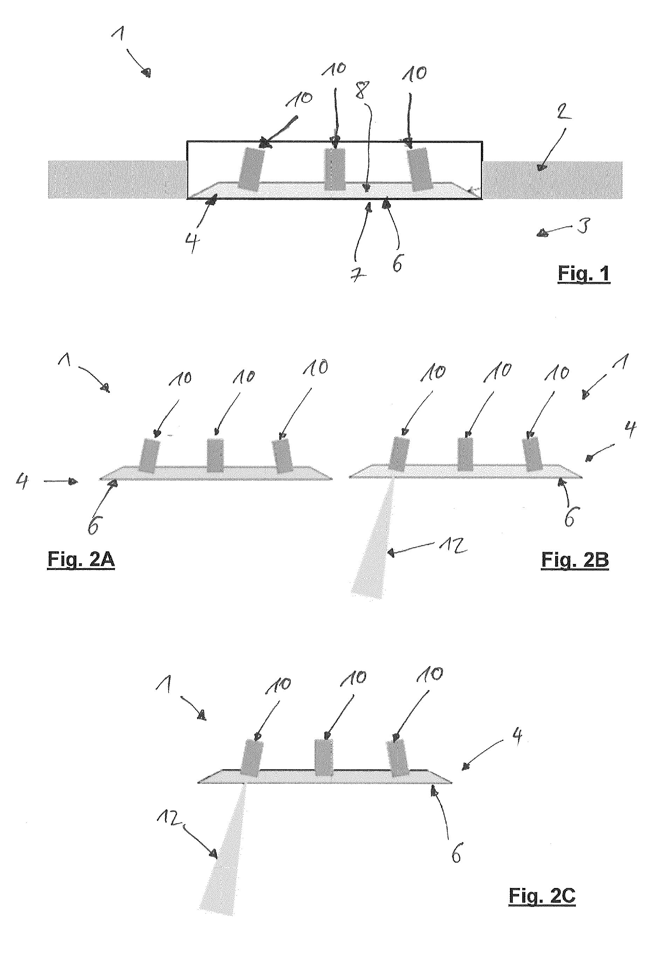

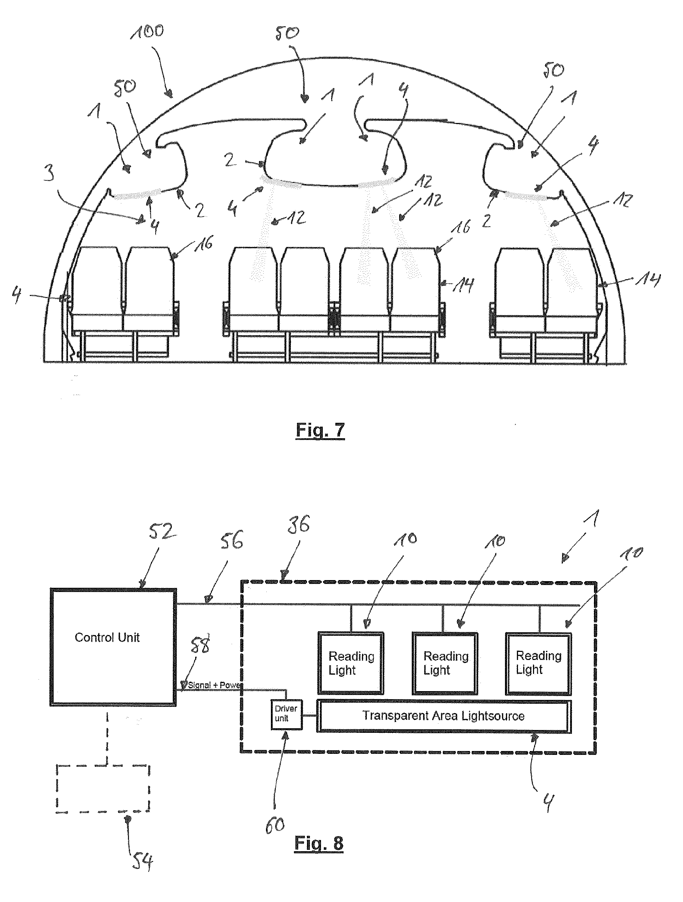

According to Fig. 1 an interior lighting device 1 of the present invention is mounted at a ceiling portion 2 of a cabin interior of passenger aircraft. The interior lighting device 1 comprises a transparent area light source 4 for providing a diffuse light to the cabin (see Fig. 7), wherein the transparent area light source 4 comprises a transparent plate shaped illuminatable body 6 which has a front side 7 and a back side 8. The front side 7 according to the embodiment of Fig.1 is oriented downwards, thus to the interior of the cabin 3. Furthermore, the interior lighting device 1 comprises three reading lights 10, provided at the back side 8 of the illuminatable body 6, for directing a focused light spot 12 (see figures 2a - 2c) through the illuminatable body 6.

Figures 2a - 2c show different modes of operation of the interior lighting device 1. According to Fig. 2a, the three reading lights 10 are switched off, while the transparent area light source 4 is switched on and the body 6 is illuminated. This mode may be chosen during normal flights or during boarding of the aircraft when a general illumination of the passenger cabin is desired. Fig. 2c shows an operation mode in which the left reading light 10 is switched on additionally and a light spot 12 is directed through the body 6. As can be seen from Fig. 2, it is possible to switch on both, the transparent area light source 4, as well as the reading light 10. The reading light 10 is optically coupled with the transparent area light source 4, so that the light spot 12 provided by the reading light 10 and directed through the body 6 is directed and focused and has a defined geometry.

According to Fig. 2b, a mode of operation is shown, where the transparent area light source 4 is switched off and only the left reading light 10 is switched on. Also, in this mode of operation, the light spot 12 is projected through the body 6 and provided in a focused and defined manner with a defined geometry. Such a mode of operation may be used during a night flight or a take off and/or landing phase of the aircraft, where the general cabin illumination is not required.

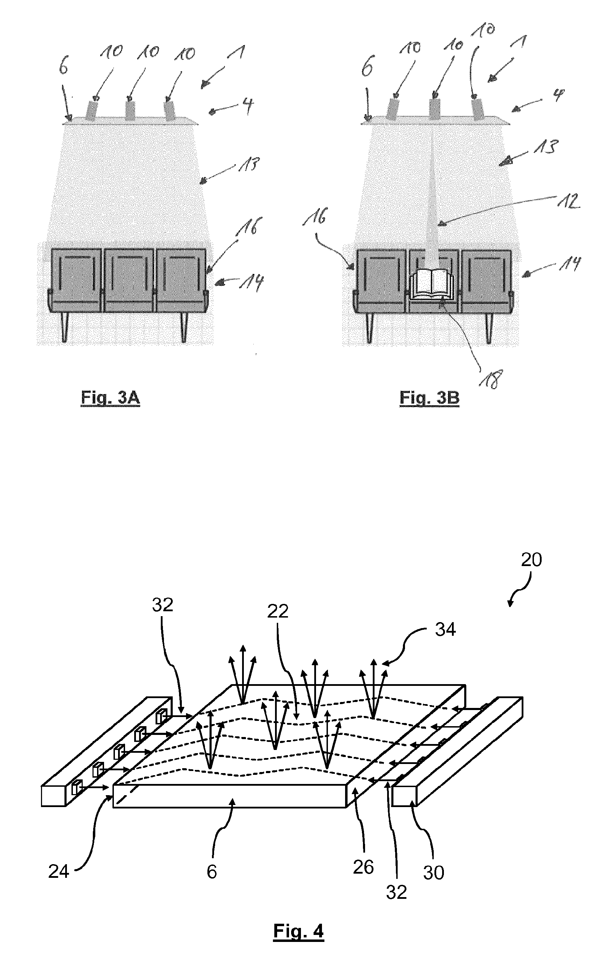

These operational modes are even more described with reference to figures 3a and 3b. Figures 3a and 3b show an embodiment where the interior lighting device 1 is mounted above a row 14 of passenger seats 16. From Fig. 3a it becomes apparent that when only the transparent area light source 4 is switched on, a general illumination 13 for the passenger row 14 is provided, when a reading light 10 is switched on (see Fig. 3b). Additionally, a reading light spot 12 is provided. Reading light spot 12 is projected through the body 6 by means of the reading light 10 and has a focused and defined geometry providing a spot 12 on for example a book 18 of a passenger seating on a seat 16.

The transparent area light source 4 may comprise a LED edge-lit element 20. The LED edge-lit element 20, according to this embodiment, comprises a body which forms the transparent body 6 of the transparent area light source 4. The transparent body 6, according to this embodiment, is formed as a glass plate having diffuser particles 22. At edges 24, 26 of the transparent body 6 two strips 28, 30 of LED elements are arranged which direct light beams 32 from the edges 24, 26 into the transparent body 6. Due to the diffuser particles 22, the light beams 32 are deflected and projected as diffused light beams 34 (in Fig. 4 only one depicted with a reference sign) out of the transparent body 6. These light beams 34 form the general illumination 13, as shown in figures 3a, 3b.

Alternatively, instead of using such an LED edge-lit element 20, it is also possible to use a transparent OLED, TOLED, or transparent AMOLED. Such elements are for example obtainable from OSRAM Licht AG, Munich, Germany. An embodiment having such an element is not shown in the figures.

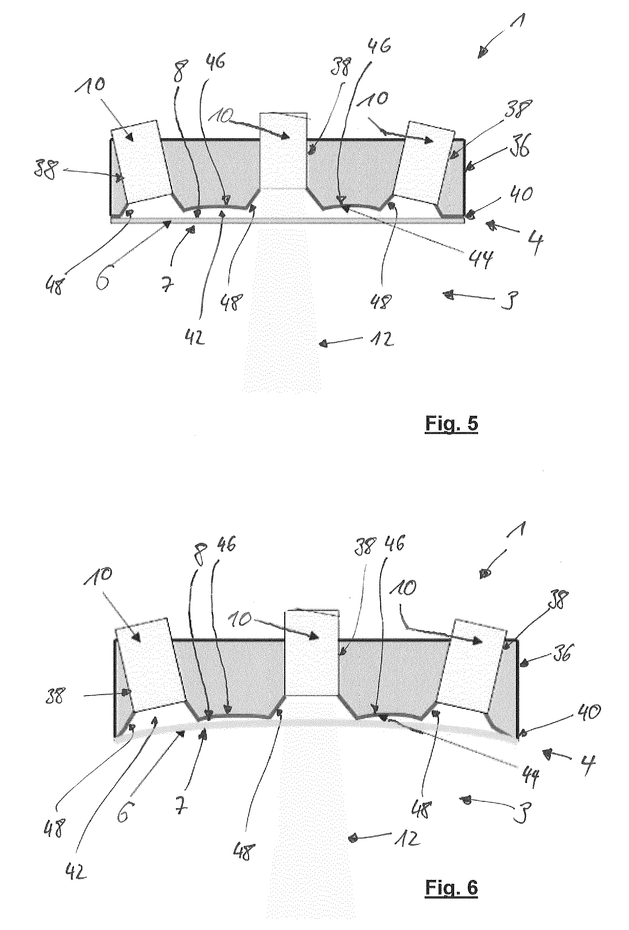

Figures 5 and 6 now illustrate two further embodiments of the interior lighting device 1. Each interior lighting device 1 of figures 5 and 6 comprise a transparent area light source 4, which comprises a transparent plate shaped illuminatable body 6. The body 6 comprises again a front side 7 and a back side 8. The interior lighting device, according to this embodiment (see figures 5 and 6) furthermore comprises a housing 36. The housing 36 is used to mount the interior lighting device 1 into a ceiling portion 2 of an aircraft cabin 3 (see figures 1 and 7). The housing 36 comprises three receiving portions 38 for receiving three reading lights 10. The reading lights 10 can be formed as reading lights known in the prior art. Each reading light 10 is adapted to provide a light spot 12 through the transparent body 6 to the cabin 3. The housing 36 furthermore comprises a mounting portion 40 which is arranged circumferentially around an interior cavity 42 for mounting the transparent body 6 to the housing 36. Opposite the back side 8 of the transparent body 6, the housing 36 is provided with a reflector surface 44 which may be formed by means of white paint on a surface of the housing 36. The reflector surface 44 comprises substantially concave shaped portions 46 and frustoconical portions 48, wherein the frustoconical portions 48 are arranged around the reading light 10. These surfaces are used to reflect light for increasing illumination and therefore efficiency.

The difference between the two embodiments shown in figures 5 and 6 is the shape of the transparent body 6. Wherein the transparent body 6, according to Fig. 5, is formed as a flat plate, according to Fig. 6 it has a curved appearance and provides a concave shaped front side 7. Such an arrangement may also help for focusing the light provided by the interior lighting device 1. It is generally to be understood that the transparent body may be formed such as to fit into the interior design of the aircraft, including flat, convex and concave geometries of the transparent body or geometries wherein single parts of the transparent body are formed in a convex, concave or flat shape whereas other parts are formed differently, e.g. flat, convex, or concave, respectively.

Fig. 7 shows a partial cross-section of an aircraft 100 having a passenger cabin 3. Inside the passenger cabin 3, passenger seats 16 are provided in the form of three rows 14. Above the rows 14 luggage compartments 50 are provided. Luggage compartments 50 are provided with passenger service units (PSU) which are not shown in Fig. 7. Such passenger service units also comprise oxygen emergency devices and oxygen masks, which may fall off in the event of a cabin pressure decompression.

The outer left and right rows 14 are comprised of two neighbor seats 16 and the middle row comprises four seats. For each two seats 16 one interior lighting device 1 is provided at the PSU, in the ceiling portion 2. Each interior lighting device 1 according to this embodiment (Fig. 7) comprises a transparent area light source 4 and two reading lights 10 (which are not shown in Fig. 7). The transparent area light source 4 is shown in Fig.7 as being switched on. In total, four reading lights are switched on providing light spots 12, three for the middle row and one for the seat 16 on the right hand side. Therefore, for the whole row 14, which is formed out of eight seats in this embodiment, four interior lighting devices 1 are provided. Also, for the other rows, which are not shown in Fig. 7, interior lighting devices are provided. The plurality of interior lighting devices according to this embodiment together form an arrangement of a plurality of interior lighting devices, wherein the interior lighting devices are connected to a central control unit, such that the transparent area light sources 4, of all and/or subgroups of the interior lighting devices 1 can be switched on and off centrally. For example, the cabin attendant may switch off all transparent area light sources 4 of the interior lighting devices 1 of the row 14, shown in Fig. 7. Another subgroup may be formed of all interior lighting devices 1 which are provided for the middle row. Furthermore, it is possible to define a subgroup which consists of all interior lighting devices which are provided for rows belonging to business class.

Fig. 8 shows an example of a scheme of an interior lighting device 1. The interior lighting device 1, shown in Fig. 8, can be formed according to one of the above mentioned embodiments and comprises a transparent area light source 4 and three reading lights 10. The ghost line, enclosing the reading lights and the transparent area light source indicates the housing 36. The reading lights and the transparent area light source are connected to a control unit 52 which itself may be connected to a switch, provided at the respective PSU, comprising the interior lighting device 1. The control unit 52 furthermore may be coupled to a central control unit 54 which itself is furthermore connected to at least one more interior lighting device, preferably all interior lighting devices provided at the aircraft 100. The control unit 52 provides electrical power and signals to the reading lights and the transparent area light source via connection cables 56, 58. The transparent area light source 4 is further provided with a driver unit 60, which is beneficial when the transparent area light source comprises a transparent OLED, TOLED or a transparent AMOLED device. The driver unit provides the respective driver current for driving the OLED. Via the line 58, also signals for the transparent area light source may be provided, in case the transparent area light source is used for providing additional information to the passenger. The control unit is arranged in such a manner, that each reading light 10 and the transparent area light source 4 can be switched on and off independently from each other. The central control unit 54 is able to override the signals provided by the control unit 52 and may centrally switch on and off the transparent area light source 4 and/or reading lights 10.

## Claims

1. Interior lighting device (1) for mounting at a ceiling portion (2) of a cabin (3) interior of a passenger aircraft (100), comprising:
a transparent area lightsource (4) for providing a diffuse light to the cabin (3), wherein the transparent area lightsource (4) comprises an at least partially transparent plate-shaped illuminatable body (6), the body having a front side (7) and a back side (8), and the front side (7) being adapted to be oriented toward the cabin (3); and
at least one reading light (10) provided at the back side (7) of the illuminatable body (6) for directing a focused light spot (12) through the illuminatable body (6).

2. Interior lighting device according to claim 1, wherein the transparent area lightsource (4) comprises a transparent OLED element.

3. Interior lighting device according to claim 1, wherein the transparent area lightsource (4) comprises a LED edge-lit element (20).

4. Interior lighting device according to claim 1 or 3, wherein the transparent area lightsource (4) comprises at least one LED (28, 30) being arranged at an edge (24, 26) of the transparent body (6) for projecting light into the transparent body (6).

5. Interior lighting device according to claim 4, wherein the transparent body (6) comprises diffuser particles (22) for directing the light from the edge (24, 26) o the front side (7) of the body (6) and into the cabin (3).

6. Interior lighting device according to claim 1, wherein the reading light (10) is optically coupled with the transparent body (6) for directing a focused reading light beam (12) through the transparent body (6) for forming a light spot in the cabin (3).

7. Interior lighting device according to claim 1, comprising a control unit (52) coupled to the transparent area lightsource (4) and the reading light (10) for individually switching on and off the transparent area lightsource (4) and the reading light (10).

8. Interior lighting device according to claim 1, comprising a switch for adjusting the direction and/or the geometry of the light spot (12) of the reading light (10).

9. Interior lighting device according to claim 1, comprising a reflector surface (44) provided around the reading light (10) and extending to the transparent body (6).

10. Lighting arrangement of two or more interior lighting device (1) according to at least one of the claims 1 to 9, wherein the interior lighting devices (1) are connected to a central control unit (54), such that the transparent area lightsources (4) of all and/or subgroups of the interior lighting devices (1) can be switched on and/or off centrally.

11. Passenger Aircraft (100), comprising a passenger cabin (3), the cabin having a lighting arrangement according to claim 10.
